# EUROPÄISCHE PATENTSCHRIFT

(11) **EP 4 171 985 B1**
(45) Veröffentlichungstag und Bekanntmachung des Hinweises auf die Patenterteilung: **07.08.2024**
(21) Anmeldenummer: 21731738.7
(22) Anmeldetag: 07.06.2021
(51) Int. Cl.: B60K 37/00, B60K 35/00

(54) **BETRIEBSVERFAHREN FÜR EIN FAHRZEUGINFORMATIONSSYSTEM**
METHOD FOR OPERATING A VEHICLE INFORMATION SYSTEM
PROCÉDÉ POUR FAIRE FONCTIONNER UN SYSTÈME D'INFORMATIONS DE VÉHICULE

(30) Priorität: 29.06.2020 DE 102020116988
(43) Veröffentlichungstag der Anmeldung: 03.05.2023
(73) Patentinhaber: Audi AG, 85045 Ingolstadt (DE)
(72) Erfinder: LERZER, Jürgen, 92318 Neumarkt (DE); DALKE, Christoph, 85110 Kipfenberg (DE); JUNGE, Thomas, 85080 Gaimersheim (DE); ENDRES, Daniel, 86477 Adelsried (DE)
(74) Vertreter: RDL Patentanwälte PartG mbB
(86) Internationale Anmeldenummer: PCT/EP2021/065094
(87) Internationale Veröffentlichungsnummer: WO 2022/002530

(56) Entgegenhaltungen:
- EP-A1- 3 092 560

## Beschreibung

Die Erfindung betrifft ein Verfahren zum Betreiben eines Informationssystems eines Fahrzeugs, bei dem ein Prozessorsubsystem (Central Processing Unit, CPU) eines Ein-Chip-Systems (System on a Chip, SoC) eines Informationssystems eines Fahrzeugs eine Systempartition des Ein-Chip-Systems und eine Fahrzeug-Infotainment (In-Vehicle Infotainment, IVI)-Partition des Ein-Chip-Systems ausführt; ein Funktionssystem der Systempartition ein graphisches Bedienelement erzeugt und in einer bezogen auf eine Blickrichtung eines Nutzers des Fahrzeugs vorderen Kompositionsebene eines Hauptkompositors des Informationssystems anordnet und ein mit dem Ein-Chip-System funktional verbundener berührungsempfindlicher in dem Fahrzeug zentral angeordneter Anzeigeschirm (Center Infotainment Display, CID) des Informationssystems einen von dem Hauptkompositor bereitgestellten das graphische Bedienelement umfassenden Anzeigeinhalt anzeigt. Ferner betrifft die Erfindung ein Informationssystem für ein Fahrzeug.

Informationssysteme für Fahrzeuge sind im Stand der Technik in unterschiedlichen Ausgestaltungen bekannt und dienen dem Anzeigen von Informationen, welche ein Fahrzeug für einen Nutzer des Fahrzeugs, d.h. für einen Fahrer oder einen von dem Fahrer verschiedenen Insassen des Fahrzeugs, bereitstellt.

Die anzuzeigenden Informationen umfassen im Allgemeinen von Funktionssystemen des Fahrzeugs erzeugte graphische Ausgaben, welche eine hohe Sicherheitsrelevanz, eine große Robustheit gegenüber Störungen und eine frühe Verfügbarkeit nach dem Einschalten des Fahrzeug aufweisen und in vielen Fällen vorgeschriebene funktionale Sicherheitsanforderungen erfüllen müssen. Zu den graphischen Ausgaben von Funktionssystemen gehören beispielsweise eine Einschalt-Animation, ein System-Popup, eine Klimaanlagenbedienschnittstelle, ein Personalisierungsmodul, eine Instrumentenanzeige (cockpit display) und dergleichen.

Ferner umfassen die anzuzeigenden Informationen im Allgemeinen von Informations- und Unterhaltungssystemen des Fahrzeugs erzeugte graphische Ausgaben, welche der Information oder der Unterhaltung des Nutzers dienen, als Fahrzeug-Infotainment (In-Vehicle Infotainment, IVI)-Systeme bezeichnet werden und in erster Linie ein angenehmes Nutzererlebnis (User eXperience, UX) verursachen und vielfältige Nutzungsmöglichkeiten bieten sollen. Beispielsweise gehören ein Navigationssystem, ein Radio, ein Telefon, ein Internet-Browser, ein Multimediasystem und eine Anwendung zum Verbinden mit externen Geräten wie beispielsweise zum Integrieren eines Smartphones zu den Informations- und Unterhaltungssystemen des Fahrzeugs, welche graphische Infotainmentelemente erzeugen.

Die Funktionssysteme des Fahrzeugs sowie die Informations- und Unterhaltungssysteme des Fahrzeugs können als ein Ein-Chip-System (System on a Chip, SoC) mit einer die Funktionssysteme des Fahrzeugs umfassenden Systempartition und einer die Informations- und Unterhaltungssysteme, kurz IVI-Systeme, des Fahrzeugs umfassenden Fahrzeug-Infotainment-Partition, kurz IVI-Partition, sowie einem Prozessorsubsystem (Central Processing Unit, CPU) zum Ausführen der System-Partition und der IVI-Partition ausgebildet sein. Das Ein-Chip-System kann von dem Informationssystem umfasst sein.

Zu dem Informationssystem kann auch ein mit dem Ein-Chip-System funktional verbundener in dem Fahrzeug zentral angeordneter Anzeigeschirm (Center Infotainment Display, CID) gehören, welcher zumeist berührungsempfindlich und in erster Linie zum Anzeigen einer von einem IVI-System erzeugten graphischen Ausgabe, kurz einer IVI-Ausgabe, und zum Betätigen der Funktionssysteme und der IVI-Systeme ausgebildet ist. Vielfach besteht aber ein Bedarf, auf dem zentralen Anzeigeschirm eine von einem Funktionssystem erzeugte graphische Ausgabe, kurz eine Systemausgabe, während des Betriebs des Informationssystems gemeinsam mit der IVI-Ausgabe anzuzeigen.

Durch Berühren des zentralen Anzeigebildschirms beispielsweise mit einem Finger kann der Nutzer ein auf dem Anzeigebildschirm angezeigtes Bedienelement einer graphischen Ausgabe auswählen und eine dem graphischen Bedienelement zugeordnete Funktion auslösen. So offenbart DE 10 2014 111 749 A1 ein Informationssystem für ein Fahrzeug und ein Verfahren zum Betreiben des Informationssystems. Von einem berührungsempfindlichen in dem Fahrzeug zentral angeordneten Anzeigeschirm wird eine Anzahl von Berührungspunkten eines oder mehrerer Finger und eine Bewegung der Anzahl von Berührungspunkten erfasst. Anhand der Anzahl von Berührungspunkten wird eine Funktion ausgewählt und anhand der Bewegung der Anzahl von Berührungspunkten wird eine Geste erkannt und die gewählte Funktion abhängig von der erkannten Geste ausgelöst.

Das gemeinsame Anzeigen mehrerer graphischer Ausgaben kann in mehreren disjunkten Ausschnitten einer Anzeigefläche des zentralen Anzeigeschirms erfolgen. Dabei kann es wünschenswert sein, eine Größe der Ausschnitte wahlweise manuell an die graphischen Ausgaben anzupassen. Ein solches Informationssystem für ein Fahrzeug und ein Verfahren zum Betreiben des Informationssystems offenbart DE 10 2012 022 312 A1. Auf einem berührungsempfindlichen Anzeigeschirm des Informationssystems werden zwei verschiedene graphische Ausgaben in zwei durch eine Linie voneinander getrennten Ausschnitten des Anzeigeschirms nebeneinander angezeigt. Ein Nutzer kann die vertikale Linie in einer Querrichtung mittels einer manuellen Berührgeste verschieben, um Flächen der beiden Ausschnitte zu vergrößern bzw. zu verkleinern und den jeweiligen graphischen Ausgaben mehr bzw. weniger Raum geben.

Das gemeinsame Anzeigen von graphischen Ausgaben, welche einerseits von Funktionssystemen und andererseits von IVI-Systemen erzeugt sind, auf dem zentralen Anzeigeschirm bringt aber weitere Probleme mit sich.

Zunächst kann eine Funktion oder Sichtbarkeit einer von der Systempartition erzeugten graphischen Ausgabe durch eine von der IVI-Partition erzeugte graphische Ausgabe beeinträchtigt sein. Zwar könnte man der Beeinträchtigung mittels einer Fehlerkennungslogik (watchdog logic) entgegenwirken, welche die Systemausgabe bei Bedarf derart in den Vordergrund bringt, dass sie die IVI-Ausgabe zumindest teilweise überdeckt. Jedoch wäre dann das von der IVI-Ausgabe verursachte Nutzererlebnis beeinträchtigt und die Komplexität des Informationssystems erhöht.

Weiterhin kann ein von einer Systemausgabe freigelassener und zum Anzeigen einer IVI-Ausgabe nutzbarer Ausschnitt des Anzeigeschirms unzureichend sein. Beispielsweise lässt sich ein üblicherweise in dem standardisierten Seitenverhältnis 16:9 formatierter Videostrom nur unzureichend klein anzeigen. Oder ein Eingabemethodeneditor (Input Method Editor, IME), welcher eine Tastatur simuliert, kann nicht genügend Anzeigefläche für eine Trefferliste freilassen. Oder eine IVI-Anwendung, welche für ihre graphischen Ausgaben einen Immersivmodus (immersive mode, verfügbar ab Android 4.4) nutzt, ist durch die graphischen Ausgaben der Systempartition eingeschränkt.

Abgesehen davon kann eine Kompatibilität von Fremdanwendungen mit einem von einem Originalhersteller (Original Equipment Manufacturer, OEM) des Fahrzeugs bereitgestellten IME nicht sichergestellt werden. Nur mit einer vollständigen Kompatibilität könnte dem IME des Originalherstellers als einziger Anwendung der IVI-Partition erlaubt werden, eine Systemausgabe abzudecken.

Das Dokument EP 3 092 560 A1 zeigt ein Verfahren zum Betreiben eines Informationssystems eines Fahrzeugs, bei dem ein Prozessorsubsystem eines Ein-Chip-Systems eines Informationssystems eines Fahrzeugs eine Systempartition des Ein-Chip-Systems und eine Fahrzeug-Infotainment-Partition des Ein-Chip-Systems ausführt, und bei dem ein Funktionssystem der Systempartition ein graphisches Bedienelement erzeugt.

Der Erfindung liegt daher die Aufgabe zugrunde, ein verbessertes Verfahren zum Betreiben eines Informationssystems eines Fahrzeugs vorzuschlagen, welches einfach implementierbar und handhabbar ist sowie sowohl ein angenehmes von IVI-Ausgaben verursachtes Nutzererlebnis als auch eine Funktion und Sichtbarkeit von Systemausgaben gewährleistet. Darüber hinaus ist es Aufgabe der Erfindung, ein Informationssystem für ein Fahrzeug zur Verfügung zu stellen.

Der Gegenstand der Erfindung, gemäss dem Anspruch 1, ist ein Verfahren zum Betreiben eines Informationssystems eines Fahrzeugs, bei dem ein Prozessorsubsystem des Ein-Chip-Systems eines Informationssystems eines Fahrzeugs eine Systempartition des Ein-Chip-Systems und eine Fahrzeug-Infotainment-Partition des Ein-Chip-Systems ausführt; ein Funktionssystem der Systempartition ein graphisches Bedienelement erzeugt und in einer bezogen auf eine Blickrichtung eines Nutzers des Fahrzeugs vorderen Kompositionsebene eines Hauptkompositors des Informationssystems anordnet und ein mit dem Ein-Chip-System funktional verbundener berührungsempfindlicher in dem Fahrzeug zentral angeordneter Anzeigeschirm des Informationssystems einen von dem Hauptkompositor bereitgestellten das graphische Bedienelement umfassenden Anzeigeinhalt anzeigt. Derartige Betriebsverfahren werden von Fahrzeuginformationssystemen vieler moderner Fahrzeuge ausgeführt, so dass für die vorliegende Erfindung vielfältige Verwendungsmöglichkeiten bestehen.

Unter dem graphischen Bedienelement ist ein graphisches Element zu verstehen, dem ein insbesondere positionsgleicher und konturgleicher Berührbereich des Anzeigeschirms und eine Funktion zugeordnet sind, welche die Systempartition infolge eines manuellen Berührens des Berührbereichs durch den Nutzer auslöst. Der Anzeigeinhalt wird von dem Anzeigeschirm vollflächig angezeigt, d.h. eine Außenkontur und Pixelanzahl des Anzeigeinhalts ist gleich einer Außenkontur und Pixelanzahl des Anzeigeschirms.

Bei dem erfindungsgemäßen Verfahren minimiert oder maximiert die Systempartition das graphische Bedienelement infolge eines außerhalb der Systempartition erzeugten Umschaltereignisses. Unter einem Minimieren ist ein Transformieren in einen minimierten Zustand zu verstehen, d.h. ein Verkleinern des graphischen Bedienelements. Entsprechend bedeutet ein Maximieren ein Transformieren in einen maximierten Zustand, d.h. ein Vergrößern des graphischen Bedienelements.

Das minimierte graphische Bedienelement weist eine relativ zu einer Anzeigefläche des Anzeigeschirms geringe Größe auf und deckt einen kleinen Bereich von hinteren Kompositionsebenen des Hauptkompositors ab. Infolgedessen können in hinteren Kompositionsebenen des Hauptkompositors angeordnete graphische Elemente im Wesentlichen vollflächig von dem Anzeigeschirm angezeigt werden. Die geringe Größe des Bedienelements reicht aber aus, um durch ein manuelles Berühren eine einzige dem minimierten Bedienelement zugeordnete Funktion auszulösen.

Dem maximierten graphischen Bedienelement können dagegen mehrere disjunkte Berührbereiche und den Berührbereichen jeweils unterschiedliche Funktionen zugeordnet sein, welche durch ein manuelles Berühren des jeweiligen Berührbereichs ausgelöst werden. Vorteilhaft kann das maximierte graphische Bedienelement das minimierte graphische Bedienelement umfassen, d.h. das graphische Bedienelement kann eine Erweiterung des minimierten graphischen Bedienelements sein.

Insbesondere kann das maximierte graphische Bedienelement seinerseits eine oder mehrere flüchtige Erweiterungen (flyout) aufweisen, d.h. die flüchtigen Erweiterungen werden ab dem Maximieren während einer vorbestimmten Zeitdauer angezeigt und nach der vorbestimmten Zeitdauer ausgeblendet.

Bei vielen Ausführungsformen erzeugt ein Infotainmentsystem der Fahrzeug-Infotainment-Partition ein graphisches Infotainmentelement und ordnet das graphische Infotainmentelement in einer bezogen auf die Blickrichtung hinter der vorderen Kompositionsebene angeordneten hinteren Kompositionsebene des Hauptkompositors an, führt der Hauptkompositor die hintere Kompositionsebene mit dem graphischen Infotainmentelement und die vordere Kompositionsebene mit dem graphischen Bedienelement zu dem Anzeigeinhalt derart zusammen, dass jedes graphische Element der vorderen Kompositionsebene, insbesondere das graphische Bedienelement, einen positionsgleichen und konturgleichen Bereich der hinteren Kompositionsebene, insbesondere des graphischen Infotainmentelements, abdeckt, und stellt der Hauptkompositor den zusammengeführten Anzeigeinhalt bereit.

Unter dem graphischen Infotainmentelement ist ein graphisch dargestellter Anzeigeinhalt der IVI-Partition zu verstehen, beispielsweise ein Videostrom im Standardformat mit einem Seitenverhältnis 16:9. Der Hauptkompositor führt seine sämtlichen Kompositionsebenen durch ein sukzessives Überlagern beginnend mit einer hintersten Kompositionsebene und endend mit der vorderen Kompositionsebene zusammen. Das graphische Infotainmentelement kann seinerseits von einem IVI-Kompositor (z.B. surface flinger) durch ein Zusammenführen von mehreren IVI-Ebenen und/oder ein Zusammensetzen von mehreren IVI-Elementen innerhalb einer IVI-Ebene erzeugt werden.

Bevorzugt erzeugt der Anzeigeschirm das Umschaltereignis infolge eines manuellen Berührens des auf dem zentralen Anzeigeschirm angezeigten graphischen Bedienelements durch den Nutzer und stellt das erzeugte Umschaltereignis für die Systempartition bereit. Mit anderen Worten ist dem minimierten graphischen Bedienelement das Maximieren des graphischen Bedienelements als die einzige Funktion und dem maximierten graphischen Bedienelement das Minimieren des Bedienelements als eine Funktion von mehreren Funktionen zugeordnet, d.h. das Umschaltereignis löst zustandsabhängig ein Maximieren des minimierten graphischen Bedienelements oder ein Minimieren des maximierten graphischen Bedienelements aus. Die Systempartition erfüllt hohe Sicherheitserfordernisse und ist auch bei einer Störung der IVI-Partition verfügbar. Infolgedessen kann der Nutzer während des Betriebs des Informationssystems jederzeit den Zustand des graphischen Bedienelements umschalten und insbesondere die unterschiedlichen dem maximierten Bedienelement zugeordneten Funktionen auslösen.

Alternativ oder zusätzlich kann die Fahrzeug-Infotainment-Partition das Umschaltereignis infolge eines Aktivierens oder eines Deaktivierens einer Anwendung der Fahrzeug-Infotainment-Partition, insbesondere eines Eingabemethodeneditors der Fahrzeug-Infotainment-Partition, das Umschaltereignis erzeugen und kann eine zwischen der Fahrzeug-Infotainment-Partition und der Systempartition angeordnete Umschaltschnittstelle das von der Fahrzeug-Infotainment-Partition erzeugte Umschaltereignis für die Systempartition bereitstellen. Kurz gesagt, kann das Aktivieren der Anwendung der Fahrzeug-Infotainment-Partition das Minimieren des graphischen Bedienelements bewirken und kann das Deaktivieren der Anwendung ein Maximieren des graphischen Bedienelements bewirken. Auf diese Weise wird gewährleistet, dass das zu der aktivierten Anwendung gehörende graphische Infotainmentelement im Wesentlichen vollflächig von dem Anzeigeschirm oder zumindest in einem für das graphische Infotainmentelement ausreichenden Bereich des Anzeigeschirms und gleichzeitig das minimierte graphische Bedienelement angezeigt wird.

Bei einer Ausführungsform definiert die Fahrzeug-Infotainment-Partition einen zu dem minimierten graphischen Bedienelement positionsgleichen und konturgleichen Ausnahmebereich des Anzeigeschirms und einen zu dem Ausnahmebereich exakt komplementären Ausgabebereich des Anzeigeschirms für das graphische Infotainmentelement fest. Der Ausnahmebereich bewirkt, dass das graphische Infotainmentelement den Ausnahmebereich freilässt und demzufolge nicht durch das minimierte graphische Bedienelement abgedeckt wird. Insbesondere ist jede dem graphischen Infotainmentelement zugeordnete Berührfläche in dem Ausgabebereich angeordnet und alternativ zu dem minimierten graphischen Bedienelement berührbar. Entsprechend wird der Ausgabebereich von der IVI-Partition statisch definiert und konfiguriert.

Bei einer anderen Ausführungsform definiert die Fahrzeug-Infotainment-Partition einen zu dem graphischen Bedienelement positionsgleichen und konturgleichen Ausnahmebereich des Anzeigeschirms und einen zu dem Ausnahmebereich exakt komplementären Ausgabebereich des Anzeigeschirms für das graphische Infotainmentelement abhängig von einem Zustand des graphischen Bedienelements. Mit anderen Worten wird der Ausgabebereich von der IVI-Partition während des Betriebs des Informationssystems dynamisch definiert und konfiguriert.

Bei noch einer anderen Ausführungsform ordnet die Fahrzeug-Infotainment-Partition ein zu dem maximierten graphischen Bedienelement positionsgleiches und konturgleiches funktionsloses Platzhalterelement in der hinteren Kompositionsebene an, welches von keiner Anwendung der Fahrzeug-Infotainment-Partition außer einem Eingabemethodeneditor der Fahrzeug-Infotainment-Partion abgedeckt wird. Das bedeutet, dass der Eingabemethodeneditor als einzige Anwendung der IVI-Partition zusätzlich den Anzeigebereich des maximierten graphischen Bedienelements ausnutzen kann, was mit einer besseren Nutzererfahrung betreffend den Eingabemethodeneditor einhergeht.

Die Systempartition kann das graphische Bedienelement als das maximierte graphische Bedienelement initialisieren und/oder ein Minimieren des graphischen Bedienelements oder ein Maximieren des graphischen Bedienelements kann ein Animieren des graphischen Bedienelements umfassen. Nach dem Starten des Informationssystems können demzufolge zunächst sämtliche dem graphischen Bedienelement zugeordneten Funktionen durch manuelles Berühren ausgelöst werden. Das Animieren des graphischen Bedienelements kann ein stetiges Transformieren des graphischen Bedienelements zwischen dem minimierten Zustand und dem maximierten Zustand umfassen und verbessert ein Nutzererlebnis betreffend das graphische Bedienelement.

In einer vorteilhaften Ausführungsform wird ein graphisches Steuerungselement einer Klimaanlage des Fahrzeugs, insbesondere ein Klimasteuerbalken eine Klimaanlagenbedienschnittstelle, als das graphische Bedienelement angezeigt und/oder wird in der Fahrzeug-Infotainment-Partition ein Android-Betriebssystem ausgeführt und/oder führt das Prozessorsubsystem einen das Prozessorsubsystem virtualisierenden Hypervisor aus und führt der von dem Prozessorsubsystem ausgeführte Hypervisor die Systempartition und die Fahrzeug-Infotainment-Partition aus. Der maximierte Klimasteuerbalken (full climate control bar) kann an einem unteren Rand des Anzeigeschirms eine gesamte Breite des Anzeigeschirms angeordnet sein und angezeigt werden. Der maximierte Klimasteuerbalken kann eine oder mehr als eine Klimasteuerungserweiterung, insbesondere zwei flüchtige Klimasteuererweiterungen (climate control bar flyout), aufweisen, welche zueinander beabstandet nebeneinander angeordnet sind und sich von dem maximierten Klimasteuerbalken zu dem oberen Rand des Anzeigeschirms erstrecken. Der minimierte Klimasteuerbalken (retracted climate control bar) kann als Teil des maximierten Klimasteuerbalkens in einer linken unteren Ecke als ein Rechteck, insbesondere als ein Quadrat, angeordnet sein und angezeigt werden.

Der Hypervisor abstrahiert das Prozessorsubsystem und teilt der Systempartition und der IVI-Partition eine jeweils benötigte bzw. verfügbare Rechenleistung dynamisch zu, wodurch eine Funktion der Systempartition und ein von der IVI-Partition verursachtes Nutzererlebnis optimiert werden. Zudem verhindert der Hypervisor ein Interferieren der IVI-Partition mit der Systempartition, was mit einer großen Robustheit der Funktionssysteme des Fahrzeugs gegenüber Störungen einhergeht.

Gegenstand der Erfindung ist auch ein Informationssystem für ein Fahrzeug, gemäss dem Anspruch 10, welches ein Ein-Chip-System (SoC) mit wenigstens einem Prozessorsubsystem (CPU), einer von dem Prozessorsubsystem ausführbaren Systempartition, einer von dem Prozessorsubsystem ausführbaren Fahrzeug-Infotainment (IVI)-Partition und einem Hauptkompositor, welcher eine vordere Kompositionsebene und eine hintere Kompositionsebene umfasst, und einen mit dem Ein-Chip-System funktional verbundenen berührungsempfindlichen in einem Fahrzeug zentral angeordneten Anzeigeschirm (CID) umfasst. Informationssysteme dieser Art sind in einer Vielzahl von Fahrzeugen verbaut, so dass sich zahlreiche Verwendungsmöglichkeiten für die Erfindung bieten.

Das erfindungsgemäße Informationssystem ist konfiguriert, ein erfindungsgemäßes Verfahren auszuführen. Das erfindungsgemäß betriebene Informationssystem stellt einerseits eine hohe Verfügbarkeit von Funktionen der Systempartition sicher und erlaubt andererseits ein angenehmes Nutzererlebnis betreffend graphische Ausgaben der IVI-Partition. Zudem ist das Informationssystem einfach zu implementieren und zu handhaben.

Bevorzugt umfasst die Fahrzeug-Infotainment-Partition ein Android-Betriebssystem. Android-Betriebssysteme sind weit verbreitet und weisen eine hohe Verfügbarkeit auf. Wenn das Android-Betriebssystem eine Version von 4.4 oder höher aufweist, lässt sich der Ausgabebereich für das graphische Infotainmentelement dynamisch während der Laufzeit konfigurieren.

Ein wesentlicher Vorteil des erfindungsgemäßen Verfahrens besteht darin, dass die graphische Ausgabe der IVI-Partition auch ohne eine selbst fehleranfällige Wachhund-Logik im Wesentlichen die gesamte Anzeigefläche des zentralen Anzeigeschirms nutzen kann, was mit einem angenehmen Nutzererlebnis einhergeht. Weiterhin vorteilhaft ist, dass ein Nutzer die graphische Ausgabe der IVI-Partition zwischen einer Nutzung der im Wesentlichen gesamten Anzeigefläche und einer zugunsten einer graphischen Ausgabe der Systempartition reduzierten Anzeigefläche wahlweise umschalten kann. Darüber kann ein separater Anzeigeschirm für graphische Systemausgaben entfallen, und eine Größe des zentralen Anzeigeschirms kann reduziert sein.

Die Erfindung ist anhand von Ausführungsformen in den Zeichnungen schematisch dargestellt und wird unter Bezugnahme auf die Zeichnungen weiter beschrieben. Es zeigt:
- Figur 1: einen Anzeigeinhalt eines Informationssystems für ein Fahrzeug nach einer Ausführungsform des Stands der Technik;
- Figur 2: ein Blockdiagramm eines Informationssystems für ein Fahrzeug nach einer Ausführungsform der Erfindung, welches mit einem Verfahren nach einer ersten Ausführungsform der Erfindung betrieben wird;
- Figur 3: ein Blockdiagramm des in Figur 2 gezeigten Informationssystems, welches mit einem Verfahren nach einer zweiten Ausführungsform der Erfindung betrieben wird;
- Figur 4: ein Blockdiagramm des in Figur 2 gezeigten Informationssystems, welches mit einem Verfahren nach einer dritten Ausführungsform der Erfindung betrieben wird;
- Figur 5: ein Flussdiagramm eines Verfahrens zum Betätigen des in den Figuren 2 bis 4 gezeigten Informationssystems;
- Figur 6: ein Flussdiagramm eines weiteren Verfahrens zum Betätigen des in Figuren 2 bis 4 gezeigten Informationssystems.

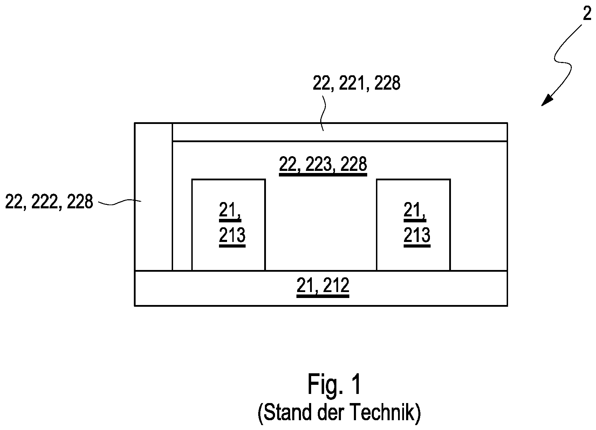

Figur 1 zeigt einen Anzeigeinhalt 2 eines Informationssystems für ein Fahrzeug nach einer Ausführungsform des Stands der Technik. Der Anzeigeinhalt 2 umfasst ein graphisches Bedienelement 21, welches als ein graphisches Steuerungselement einer Klimaanlage eines Fahrzeugs einen Klimasteuerbalken 212 und zwei zueinander beabstandet nebeneinander angeordnete Erweiterungen 213 des Klimasteuerbalkens 212 umfasst, welche beispielsweise einem rechten Vordersitz bzw. einem linken Vordersitz des Fahrzeugs zugeordnet sind. Der Klimasteuerbalken 212 ist in einem unteren Randbereich des Anzeigeinhalts 2 angeordnet und erstreckt sich entlang einer Gesamtbreite des Anzeigeinhalts 2. Während der Klimasteuerbalken 212 dauerhaft angezeigt wird, können die beiden Erweiterungen 213 flüchtig sein, d.h. nur temporär angezeigt werden.

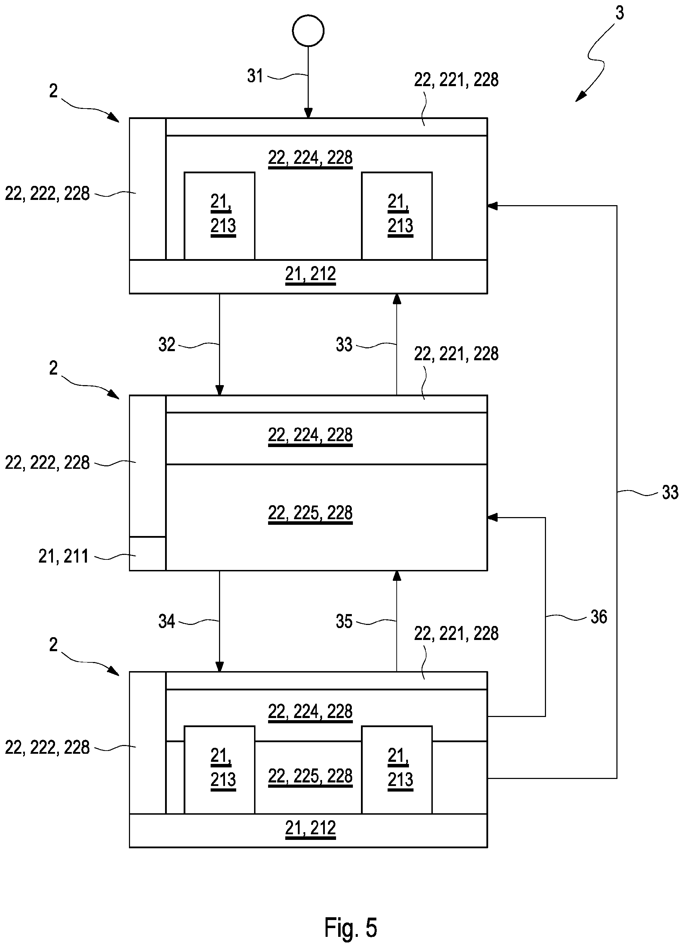

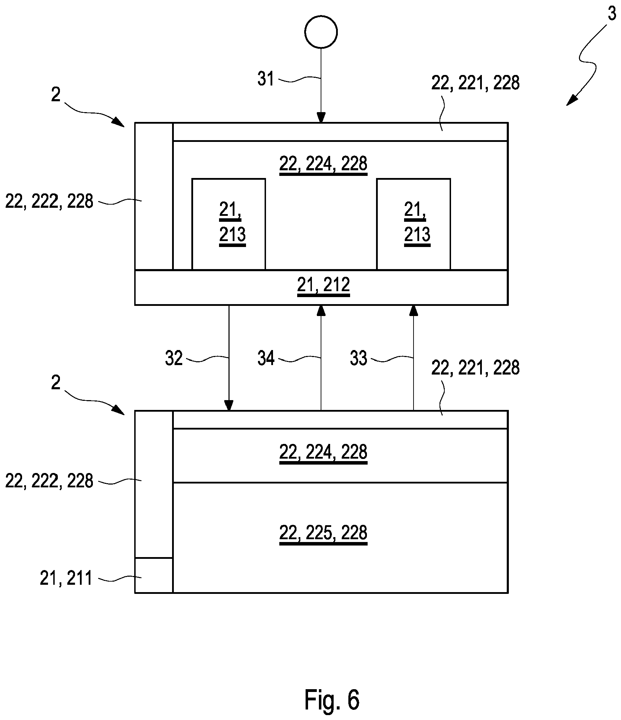

Ferner umfasst der Anzeigeinhalt 2 ein graphisches Infotainmentelement 22, welches eine Statusleiste 221, eine Navigationsleiste 222 und eine Klimasteuerungserweiterung 223 umfasst. Die Klimasteuerungserweiterung 223 stellt eine Mehrzahl von Funktionen der Klimaanlage, insbesondere Schalter, Schieber und/oder Regler zum Einstellen, sowie eine Mehrzahl von Informationen von der Klimaanlage, insbesondere Betriebsparameter der Klimaanlage, bereit. Anstelle der Klimasteuerungserweiterung 223 kann auch ein graphischer IVI-Inhalt 224 (siehe Figuren 5 und 6) eines Infotainmentsystems des Fahrzeugs, beispielsweise ein Web-Browser oder ein Videostrom, Teil des Anzeigeinhalts 2 sein.

Die Klimasteuerungserweiterung 223 oder alternativ die graphische Ausgabe des Infotainmentsystems können von dem Klimasteuerbalken 212 teilweise abgedeckt und folglich nicht vollständig sichtbar sein oder verkleinert, d.h. mit einer verringerten Höhe, und vollständig angezeigt werden. In beiden Fällen ist ein Nutzererlebnis beeinträchtigt.

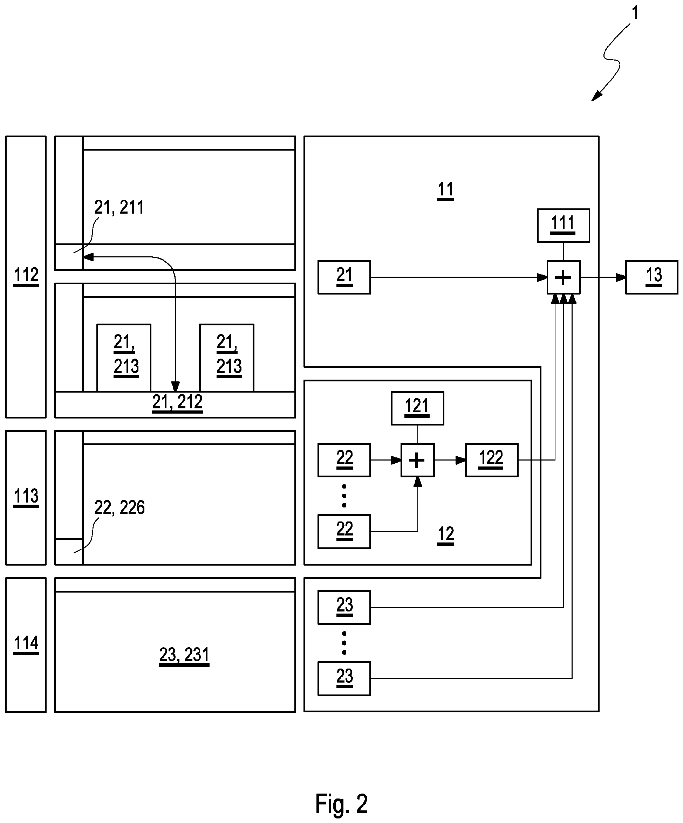

Figur 2 zeigt ein Blockdiagramm eines Informationssystems 1 für ein Fahrzeug nach einer Ausführungsform der Erfindung, welches mit einem Verfahren nach einer ersten Ausführungsform der Erfindung betrieben wird. Das Informationssystem 1 umfasst ein Ein-Chip-System (System on a Chip, SoC) mit wenigstens einem Prozessorsubsystem (Central Processing Unit, CPU), einer von dem Prozessorsubsystem ausführbaren Systempartition 11, einer von dem Prozessorsubsystem ausführbaren Fahrzeug-Infotainment (In-Vehicle-Infotainment, IVI)-Partition 12.

Die Systempartition 11 umfasst einen Hauptkompositor (master compositor, MCP) 111 mit einer bezogen auf eine Blickrichtung eines Nutzers des Fahrzeugs vorderen Kompositionsebene 112 und einer bezogen auf die Blickrichtung des Nutzers hinter der vorderen Kompositionsebene 112 angeordneten hinteren Kompositionsebene 113 sowie einer hintersten Kompositionsebene 114. Der Hauptkompositor 111 kann weitere Kompositionsebenen umfassen. Die Systempartition ist konfiguriert, ein graphisches Bedienelement 21 und eine Mehrzahl von graphischen Systemelementen 23 zu erzeugen und in der vorderen Kompositionsebene 112 bzw. in der hintersten Kompositionsebene 114 anzuordnen. Die graphischen Systemelemente 23 können einen graphischen Hintergrund 231 umfassen.

Die Fahrzeug-Infotainment-Partition 12 umfasst einen IVI-Kompositor (surface flinger) 121 und einen Hardwarebeschleunigungstreiber 122 und ist konfiguriert, ein graphisches Infotainmentelement 22 zu erzeugen, mittels des IVI-Kompositors 121 zusammenzuführen und mittels des Hardwarebeschleunigungstreibers 122 in der hinteren Kompositionsebene 113 anzuordnen.

Das Ein-Chip-System kann einen Hypervisor umfassen, welcher konfiguriert ist, von dem Prozessorsubsystem ausgeführt zu werden und die Systempartition 11 und die IVI-Partition 12 auszuführen.

Ferner umfasst das Informationssystem 1 einen mit dem Ein-Chip-System funktional verbundenen berührungsempfindlichen in dem Fahrzeug zentral angeordneten Anzeigeschirm (Center Infotainment Display, CID) 13.

Das Informationssystem 1 ist konfiguriert, das folgende Verfahren auszuführen.

Das Prozessorsubsystem des Ein-Chip-Systems des Informationssystems 1 des Fahrzeugs führt die Systempartition 11 des Ein-Chip-Systems und die Fahrzeug-Infotainment-Partition 12 des Ein-Chip-Systems aus. Wenn das Ein-Chip-System einen Hypervisor umfasst, führt das Prozessorsubsystem den das Prozessorsubsystem virtualisierenden Hypervisor aus und führt der von dem Prozessorsubsystem ausgeführte Hypervisor die Systempartition 11 und die Fahrzeug-Infotainment-Partition 12 aus. In der Fahrzeug-Infotainment-Partition 12 kann ein Android-Betriebssystem ausgeführt werden, bevorzugt ein Android-Betriebssystem der Version 4.4 oder höher.

Ein Funktionssystem der Systempartition 11 erzeugt das graphische Bedienelement 21 und ordnet das graphische Bedienelement 21 in der vorderen Kompositionsebene 112 des Hauptkompositors 111 des Informationssystems 1 an. Ferner erzeugt die Systempartition 11 den graphischen Hintergrund und ordnet den graphischen Hintergrund 231 in der hintersten Kompositionsebene 114 an.

Ein Infotainmentsystem der Fahrzeug-Infotainment-Partition 12 erzeugt mittels des IVI-Kompositors 121 und des Hardwarebeschleunigungstreibers 122 das graphische Infotainmentelement 22 und ordnet das graphische Infotainmentelement 22 in der hinteren Kompositionsebene 113 des Hauptkompositors 111 an.

Der Hauptkompositor 111 führt die hintere Kompositionsebene 113 mit dem graphischen Infotainmentelement 22 und die vordere Kompositionsebene 112 mit dem graphischen Bedienelement 21 zu dem Anzeigeinhalt 2 derart zusammen, dass jedes graphische Element der vorderen Kompositionsebene 112, insbesondere das graphische Bedienelement 21, einen positionsgleichen und konturgleichen Bereich der hinteren Kompositionsebene 113, insbesondere des graphischen Infotainmentelements 22, abdeckt, und stellt den zusammengeführten Anzeigeinhalt 2 bereit.

Der Anzeigeschirm 13 des Informationssystems 1 zeigt den von dem Hauptkompositor 111 bereitgestellten das graphische Bedienelement 21 umfassenden Anzeigeinhalt 2 an. Lediglich beispielhaft wird ein graphisches Steuerungselement einer Klimaanlage des Fahrzeugs, insbesondere ein Klimasteuerbalken 212 einer Klimaanlagenbedienschnittstelle, als das graphische Bedienelement 21 angezeigt.

Der Anzeigeschirm 13 erzeugt ein Umschaltereignis infolge eines manuellen Berührens des auf dem Anzeigeschirm 13 angezeigten graphischen Bedienelements 21 durch den Nutzer und stellt das erzeugte Umschaltereignis für die Systempartition 11 bereit. Die Systempartition 11 minimiert oder maximiert das graphische Bedienelement 21, 211, 212 infolge des außerhalb der Systempartition 11 erzeugten Umschaltereignisses.

Alternativ oder zusätzlich kann die Fahrzeug-Infotainment-Partition 12 das Umschaltereignis infolge eines Aktivierens oder eines Deaktivierens einer Anwendung der Fahrzeug-Infotainment-Partition 12, insbesondere eines Eingabemethodeneditors (Input Method Editor, IME) 225 der Fahrzeug-Infotainment-Partition 12, das Umschaltereignis erzeugen und eine zwischen der Fahrzeug-Infotainment-Partition 12 und der Systempartition 11 angeordnete Umschaltschnittstelle das von der Fahrzeug-Infotainment-Partition 12 erzeugte Umschaltereignis für die Systempartition 11 bereitstellen.

Die Fahrzeug-Infotainment-Partition 12 definiert einen zu dem minimierten graphischen Bedienelement 211 positionsgleichen und konturgleichen Ausnahmebereich 226 des Anzeigeschirms 13 und einen zu dem Ausnahmebereich 226 exakt komplementären Ausgabebereich 228 des Anzeigeschirms 13 für das graphische Infotainmentelement 22 fest, d.h. der Ausnahmebereich 226 und der Ausgabebereich 228 sind statisch und während des Betriebs des Informationssystems 1 unveränderlich und nehmen gemeinsam eine gesamte Anzeigefläche des Anzeigeschirms 13 ein.

Ein Minimieren des graphischen Bedienelements 21, 212 oder ein Maximieren des graphischen Bedienelements 21, 211 kann ein Animieren, d.h. ein stetiges Transformieren, des graphischen Bedienelements 21 umfassen. Das graphische Bedienelement 21 wird nach einem Einschalten des Informationssystems 1 als das maximierte graphische Bedienelement 212 initialisiert.

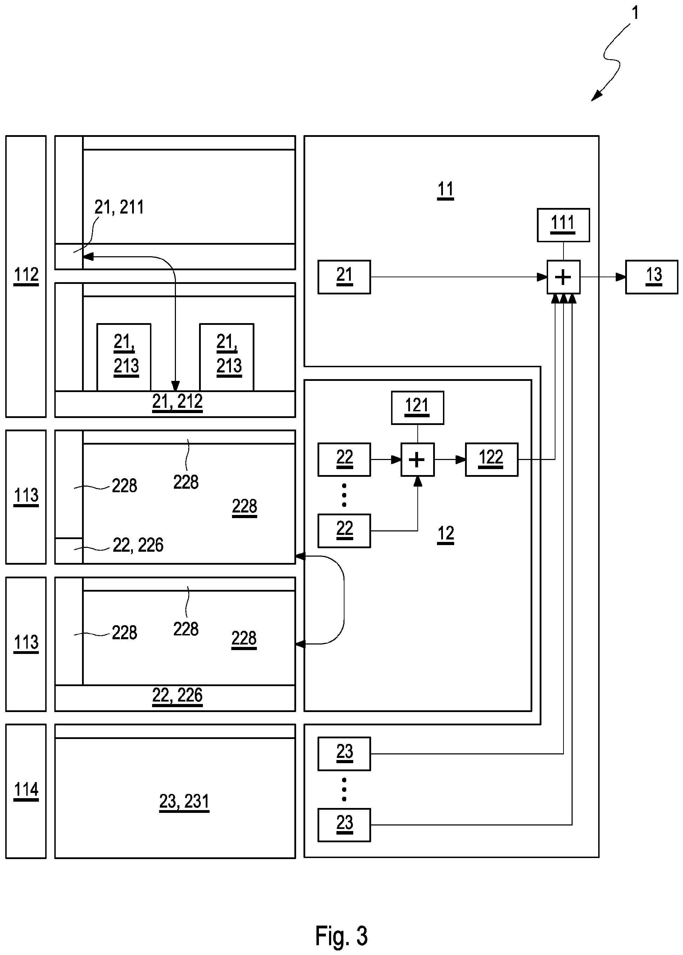

Figur 3 zeigt ein Blockdiagramm des in Figur 2 gezeigten Informationssystems 1, welches mit einem Verfahren nach einer zweiten Ausführungsform der Erfindung betrieben wird. Das Verfahren unterscheidet sich von dem in Figur 2 gezeigten Verfahren dadurch, dass die Fahrzeug-Infotainment-Partition 12 einen zu dem graphischen Bedienelement 21, 211, 212 positionsgleichen und konturgleichen Ausnahmebereich 226 des Anzeigeschirms 13 und einen zu dem Ausnahmebereich 226 exakt komplementären Ausgabebereich 228 des Anzeigeschirms 13 für das graphische Infotainmentelement 22 abhängig von einem Zustand des graphischen Bedienelements 21, 211, 212 definiert. Mit anderen Worten , sind der Ausnahmebereich 226 und der Ausgabebereich 228 dynamisch und während des Betriebs des Informationssystems 1 veränderlich und nehmen gemeinsam stets die gesamte Anzeigefläche des Anzeigeschirms 13 ein.

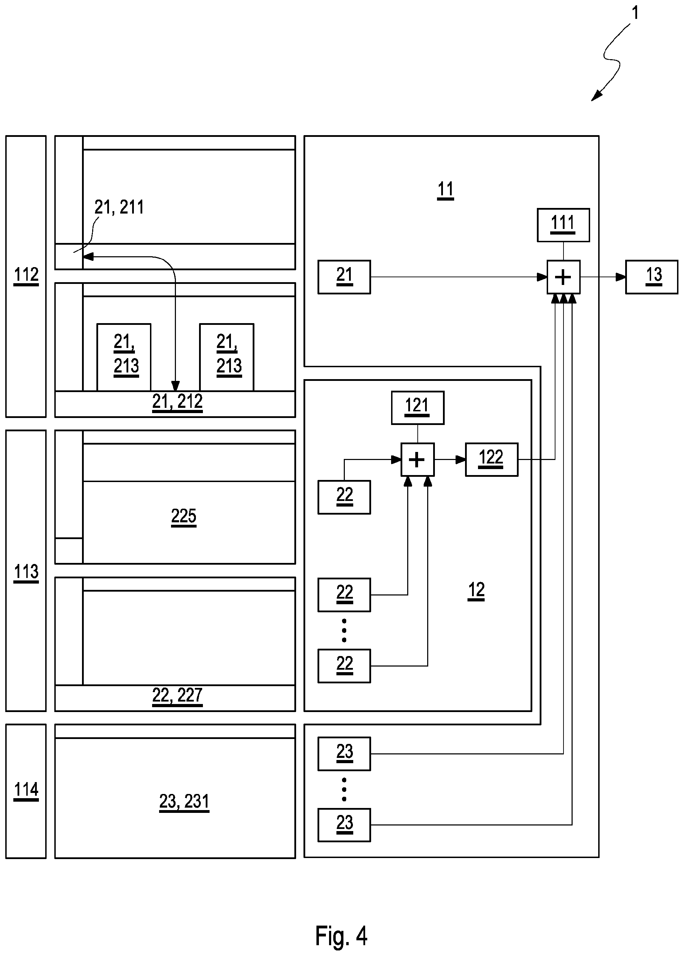

Figur 4 zeigt ein Blockdiagramm des in Figur 2 gezeigten Informationssystems 1, welches mit einem Verfahren nach einer dritten Ausführungsform der Erfindung betrieben wird. Das Verfahren unterscheidet sich von dem in den Figuren 2 und 3 gezeigten Verfahren dadurch, dass die Fahrzeug-Infotainment-Partition 12 ein zu dem maximierten graphischen Bedienelement 212 positionsgleiches und konturgleiches funktionsloses Platzhalterelement 227 in der hinteren Kompositionsebene 113 anordnet, welches von keiner Anwendung der Fahrzeug-Infotainment-Partition 12 außer dem Eingabemethodeneditor 225 der Fahrzeug-Infotainment-Partition 12 abgedeckt wird. Das Ausweichen des Eingabemethodeneditors 225 in den Bereich des Platzhalterelements 227 bewirkt, dass der Eingabemethodeneditor 225 den Bereich des maximierten graphischen Bedienelements 212 nutzen kann.

Figur 5 zeigt ein Flussdiagramm eines Verfahrens 3 zum Betätigen des in den Figuren 2 bis 4 gezeigten Informationssystems 1.

Das Informationssystem wurde mit dem maximierten Bedienelement 212 initialisiert 31. Der Anzeigeinhalt 2 umfasst die Statusleiste 221, die Navigationsleiste 222 und einen graphischen IVI-Inhalt 224, beispielsweise einen Web-Browser, welche gemeinsam den Ausgabebereich 228 bilden, sowie das graphische Bedienelement 21, welches das maximierte graphische Bedienelement 212 und die beiden flüchtigen Erweiterungen 213 umfasst. Der Eingabemethodeneditor 225 wird von dem Nutzer durch Auswählen eines Eingabefelds des graphischer IVI-Inhalts 224 aktiviert 32, wodurch das maximierte graphische Bedienelement 212 minimiert wird. Durch Beendigen einer Eingabe in das Eingabefeld deaktiviert 33 der Nutzer den Eingabemethodeneditors 225, wodurch das minimierte graphische Bedienelement 211 maximiert werden. Alternativ dazu werden der Eingabemethodeneditor 225 deaktiviert und das minimierte graphische Bedienelement 211 maximiert, wenn der Nutzer das minimierte Bedienelement 211 manuell berührt 34.

Figur 6 zeigt ein Flussdiagramm eines weiteren Verfahrens 3 zum Betätigen des in Figuren 2 bis 4 gezeigten Informationssystems 1. Das Verfahren unterscheidet sich von dem Figur 5 gezeigten Verfahren dadurch, dass infolge des Berührens des minimierten graphischen Bedienelements 211 der Eingabemethodeneditor 225 deaktiviert und nicht teilweise von dem maximierten Bedienelement 212 abgedeckt wird.

Wenn der Nutzer den teilweise abgedeckten Eingabemethodeneditor 225 durch Beenden einer Eingabe deaktiviert, wird der Anzeigeinhalt 2 nach dem Initialisieren 31 des Informationssystems 1 wieder hergestellt. Alternativ kann der Nutzer das maximierte Bedienelement 212 durch manuelles Berühren 35 des maximierten Bedienelements 212 oder durch manuelles Berühren 36 des graphischen IVI-Inhalts 224 minimieren.

### BEZUGSZEICHENLISTE:

- 1: Informationssystem
- 11: Systempartition
- 111: Hauptkompositor
- 112: vordere Kompositionsebene
- 113: hintere Kompositionsebene
- 114: hinterste Kompositionsebene
- 12: Fahrzeug-Infotainment (In-Vehicle Infotainment, IVI)-Partition
- 121: IVI-Kompositor
- 122: Hardwarebeschleunigungstreiber
- 13: Anzeigeschirm

- 2: Anzeigeinhalt
- 21: graphisches Bedienelement
- 211: minimiertes graphisches Bedienelement, Klimasteuerbalken (Climate Control Bar) im minimierten Zustand
- 212: maximiertes graphisches Bedienelement, Klimasteuerbalken im maximierten Zustand
- 213: flüchtige Erweiterung des maximierten graphischen Bedienelements (Climate Control Bar Layout)
- 22: graphisches Infotainmentelement
- 221: Statusleiste
- 222: Navigationsleiste
- 223: Klimasteuerungserweiterung (Climate Control Flyout)
- 224: graphischer IVI-Inhalt
- 225: Eingabemethodeneditor (IME)
- 226: Ausnahmebereich
- 227: Platzhalterelement
- 228: Ausgabebereich
- 23: graphisches Systemelement
- 231: graphischer Hintergrund

- 3: Verfahren zum Betätigen
- 31: Initialisieren
- 32: Aktivieren IME
- 33: Deaktivieren IME
- 34: manuelles Berühren des minimierten graphischen Bedienelements
- 35: manuelles Berühren des maximierten graphischen Bedienelements
- 36: manuelles Berühren des IVI-Inhalts

## Patentansprüche

1. Verfahren zum Betreiben eines Informationssystems (1) eines Fahrzeugs, bei dem
- ein Prozessorsubsystem eines Ein-Chip-Systems eines Informationssystems (1) eines Fahrzeugs eine Systempartition (11) des Ein-Chip-Systems und eine Fahrzeug-Infotainment-Partition (12) des Ein-Chip-Systems ausführt;
- ein Funktionssystem der Systempartition (11) ein graphisches Bedienelement (21) erzeugt und in einer bezogen auf eine Blickrichtung eines Nutzers des Fahrzeugs vorderen Kompositionsebene (112) eines Hauptkompositors (111) des Informationssystems (1) anordnet;
- ein mit dem Ein-Chip-System funktional verbundener berührungsempfindlicher in dem Fahrzeug zentral angeordneter Anzeigeschirm (13) des Informationssystems (1) einen von dem Hauptkompositor (111) bereitgestellten das graphische Bedienelement (21) umfassenden Anzeigeinhalt (2) anzeigt; und
- die Systempartition (11) das graphische Bedienelement (21, 211, 212) infolge eines außerhalb der Systempartition (11) erzeugten Umschaltereignisses minimiert oder maximiert.

2. Verfahren nach Anspruch 1, bei dem
- ein Infotainmentsystem der Fahrzeug-Infotainment-Partition (12) ein graphisches Infotainmentelement (22) erzeugt und in einer bezogen auf die Blickrichtung hinter der vorderen Kompositionsebene (112) angeordneten hinteren Kompositionsebene (113) des Hauptkompositors (111) anordnet; und
- der Hauptkompositor (111) die hintere Kompositionsebene (113) mit dem graphischen Infotainmentelement (22) und die vordere Kompositionsebene (112) mit dem graphischen Bedienelement (21) zu dem Anzeigeinhalt (2) derart zusammenführt, dass jedes graphische Element der vorderen Kompositionsebene (112) einen positionsgleichen und konturgleichen Bereich der hinteren Kompositionsebene (113) abdeckt, und
- der Hauptkompositor (111) den zusammengeführten Anzeigeinhalt (2) bereitstellt.

3. Verfahren nach einem der Ansprüche 1 oder 2, bei dem der Anzeigeschirm (13) das Umschaltereignis infolge eines manuellen Berührens des auf dem Anzeigeschirm (13) angezeigten graphischen Bedienelements (21) durch den Nutzer erzeugt und das erzeugte Umschaltereignis für die Systempartition (11) bereitstellt.

4. Verfahren nach einem der Ansprüche 1 bis 3, bei dem die Fahrzeug-Infotainment-Partition (12) das Umschaltereignis infolge eines Aktivierens oder eines Deaktivierens einer Anwendung der Fahrzeug-Infotainment-Partition (12) das Umschaltereignis erzeugt und eine zwischen der Fahrzeug-Infotainment-Partition (12) und der Systempartition (11) angeordnete Umschaltschnittstelle das von der Fahrzeug-Infotainment-Partition (12) erzeugte Umschaltereignis für die Systempartition (11) bereitstellt.

5. Verfahren nach Anspruch 4, bei dem die Fahrzeug-Infotainment-Partition (12) einen zu dem minimierten graphischen Bedienelement (211) positionsgleichen und konturgleichen Ausnahmebereich (226) des Anzeigeschirms (13) und einen zu dem Ausnahmebereich (226) exakt komplementären Ausgabebereich (228) des Anzeigeschirms (13) für das graphische Infotainmentelement (22) fest definiert.

6. Verfahren nach einem der Ansprüche 4 oder 5, bei dem die Fahrzeug-Infotainment-Partition (12) einen zu dem graphischen Bedienelement (21, 211, 212) positionsgleichen und konturgleichen Ausnahmebereich (226) des Anzeigeschirms (13) und einen zu dem Ausnahmebereich (226) exakt komplementären Ausgabebereich (228) des Anzeigeschirms (13) für das graphische Infotainmentelement (22) abhängig von einem Zustand des graphischen Bedienelements (21, 211, 212) definiert.

7. Verfahren nach einem der Ansprüche 4 bis 6, bei dem die Fahrzeug-Infotainment-Partition (12) ein zu dem maximierten graphischen Bedienelement (212) positionsgleiches und konturgleiches funktionsloses Platzhalterelement (227) in der hinteren Kompositionsebene (113) anordnet, welches von keiner Anwendung der Fahrzeug-Infotainment-Partition (12) außer einem Eingabemethodeneditor (225) der Fahrzeug-Infotainment-Partition (12) abgedeckt wird.

8. Verfahren nach einem der Ansprüche 1 bis 7, bei dem das graphische Bedienelement (21) als das maximierte graphische Bedienelement (212) initialisiert wird und/oder ein Minimieren des graphischen Bedienelements (21, 212) oder ein Maximieren des graphischen Bedienelements (21, 211) ein Animieren des graphischen Bedienelements (21) umfasst.

9. Verfahren nach einem der Ansprüche 1 bis 8, bei dem ein graphisches Steuerungselement einer Klimaanlage des Fahrzeugs als das graphische Bedienelement (21) angezeigt wird und/oder in der Fahrzeug-Infotainment-Partition (12) ein Android-Betriebssystem ausgeführt wird und/oder das Prozessorsubsystem einen das Prozessorsubsystem virtualisierenden Hypervisor ausführt und der von dem Prozessorsubsystem ausgeführte Hypervisor die Systempartition (11) und die Fahrzeug-Infotainment-Partition (12) ausführt.

10. Informationssystem (1) für ein Fahrzeug, welches ein Ein-Chip-System mit wenigstens einem Prozessorsubsystem, einer von dem Prozessorsubsystem ausführbaren Systempartition (11), einer von dem Prozessorsubsystem ausführbaren Fahrzeug-Infotainment-Partition (12) und einem Hauptkompositor (111), welcher eine vordere Kompositionsebene (112) und eine hintere Kompositionsebene (113) umfasst, und einen mit dem Ein-Chip-System funktional verbundenen berührungsempfindlichen in einem Fahrzeug zentral angeordneten Anzeigeschirm (13) umfasst und welches konfiguriert ist, ein Verfahren nach einem der Ansprüche 1 bis 9 auszuführen.

## Claims

1. A method for operating an information system (1) of a vehicle, in which
- a processor sub-system of a system on a chip of an information system (1) of a vehicle executes a system partition (11) of the system on a chip and a vehicle infotainment partition (12) of the system on a chip;
- a functional system of the system partition (11) produces a graphical operating element (21) and locates it in a front composition plane (112) of a main compositor (111) of the information system (1), which front composition plane (12) is at the front relative to a sight line of a user of the vehicle;
- a touch-sensitive display screen (13) of the information system (1), which display screen (13) is functionally connected to the system on a chip and is arranged centrally in the vehicle, displays a display content (2) which is provided by the main compositor (111) and comprises the graphical operating element (21); and
- the system partition (11) minimizes or maximizes the graphical operating element (21, 211, 212) as a result of a switch event produced outside the system partition (11).

2. The method according to claim 1, in which
- an infotainment system of the vehicle infotainment partition (12) produces a graphical infotainment element (22) and locates it in a rear composition plane (113) of the main compositor (111), which rear composition plane (113) is located behind the front composition plane (112) relative to the sight line; and
- the main compositor (111) combines the rear composition plane (113) with the graphical infotainment element (22) and the front composition plane (112) with the graphical operating element (21) to form the display content (2) in such a way that each graphical element of the front composition plane (112) covers an area identical in position and contour of the rear compositional plane (113), and
- the main compositor (111) provides the combined display content (2).

3. The method according to either of claims 1 or 2, in which the display screen (13) produces the switching event as a result of a user manually touching the graphical operating element (21) displayed on the display screen (13) and provides the produced switching event to the system partition (11).

4. The method according to any of claims 1 to 3, in which the vehicle infotainment partition (12) produces the switching event as a result of an activation or a deactivation of an application of the vehicle infotainment partition (12), and a switching interface arranged between the vehicle infotainment partition (12) and the system partition (11) provides the switching event produced by the vehicle infotainment partition (12) to the system partition (11).

5. The method according to claim 4, in which the vehicle infotainment partition (12) fixedly defines for the graphical infotainment element (22) an exception area (226) of the display screen (13), which exception area is identical in position and contour to the minimized graphical operating element (211), and an output area (228) of the display screen (13), which output (228) area is exactly complementary to the exception area (226).

6. The method according to either of claim 4 or 5, in which the vehicle infotainment partition (12), depending on a state of the graphical operating element (21, 211, 212), defines for the graphical infotainment element (22) an exception area (226) of the display screen (13), which exception area (226) is identical in position and contour to the graphical operating element (21, 211, 212), and an output area (228) of the display screen (13), which output area (226) is exactly complementary to the exception area (226).

7. The method according to any of claims 4 to 6, in which the vehicle infotainment partition (12) locates a functionless placeholder element (227) in the rear composition plane (113), which placeholder element is identical in position and contour to the maximized graphical operating element (212) and which is not covered by any application of the vehicle infotainment partition (12) except an input method editor (225) of the vehicle infotainment partition (12).

8. The method according to any of claims 1 to 7, in which the graphical operating element (21) is initialized as the maximized graphical operating element (212) and/or minimizing the graphical operating element (21, 212) or maximizing the graphical operating element (21, 211) comprises animating the graphical operating element (21).

9. The method according to any of claims 1 to 8, in which a graphical control element of an air conditioning system of the vehicle is displayed as the graphical operating element (21) and/or an Android operating system is executed in the vehicle infotainment partition (12) and/or the processor sub-system executes a hypervisor virtualizing the processor sub-system and the hypervisor executed by the processor sub-system executes the system partition (11) and the vehicle infotainment partition (12).

10. An information system (1) of a vehicle comprising a system on a chip having at least one processor sub-system, one system partition (11) executable by the processor sub-system, one vehicle infotainment partition (12) executable by the processor sub-system, and one main compositor (111), comprising a front composition plane (112) and a rear composition plane (113), and a touch-sensitive display screen (13) functionally connected to the system on a chip and centrally arranged in a vehicle, and which information system (1) is configured to execute a method according to any of claims 1 to 9.

## Revendications

1. Procédé destiné à faire fonctionner un système d'information (1) d'un véhicule, dans lequel
- un sous-système de processeur d'un système monopuce d'un système d'information (1) d'un véhicule exécute une partition de système (11) du système monopuce et une partition d'infodivertissement (12) de véhicule du système monopuce;
- un système fonctionnel de la partition de système (11) génère un élément de commande graphique (21) et le dispose dans un plan de composition avant (112) d'un compositeur principal (111) du système d'information (1) par rapport à une direction de vision d'un utilisateur du véhicule;
- un écran d'affichage (13) tactilosensible du système d'information (1), connecté de manière fonctionnelle au système monopuce et situé au centre du véhicule, affiche un contenu d'affichage (2) comprenant l'élément de commande graphique (21) fourni par le compositeur principal (111); et
- la partition système (11) minimise ou maximise l'élément de commande graphique (21, 211, 212) suite à un événement de commutation généré en dehors de la partition de système (11).

2. Procédé selon la revendication 1, dans lequel
- un système d'infodivertissement de la partition d'infodivertissement du véhicule (12) génère un élément d'infodivertissement graphique (22) et le dispose dans un plan de composition arrière (113) du compositeur principal (111) disposé derrière le plan de composition avant (112) par rapport à la direction de vision; et
- le compositeur principal (111) combine le plan de composition arrière (113) avec l'élément d'infodivertissement graphique (22) et le plan de composition avant (112) avec l'élément de commande graphique (21) pour former le contenu d'affichage (2) de telle sorte que chaque élément graphique du plan de composition avant (112) couvre une zone de même position et de même contour que le plan de composition arrière (113), et
- le compositeur principal (111) fournit le contenu d'affichage (2) combiné.

3. Procédé selon l'une des revendications 1 ou 2, dans lequel l'écran d'affichage (13) génère l'événement de commutation suite à un toucher manuel, par l'utilisateur, de l'élément de commande graphique (21) affiché sur l'écran d'affichage (13) et fournit l'événement de commutation généré à la partition de système (11).

4. Procédé selon l'une des revendications 1 à 3, dans lequel la partition d'infodivertissement du véhicule (12) génère l'événement de commutation suite à une activation ou une désactivation d'une application de la partition d'infodivertissement (12) du véhicule, et une interface de commutation disposée entre la partition d'infodivertissement (12) du véhicule et la partition de système (11) fournit l'événement de commutation généré par la partition d'infodivertissement (12) du véhicule à la partition de système (11).

5. Procédé selon la revendication 4, dans lequel la partition d'infodivertissement (12) du véhicule définit de manière fixe une zone d'exception (226) de l'écran d'affichage (13) de même position et de même contour que l'élément de commande graphique (211) minimisé et une zone de sortie (228) de l'écran d'affichage (13) pour l'élément d'infodivertissement graphique (22) exactement complémentaire à la zone d'exception (226).

6. Procédé selon l'une des revendications 4 ou 5, dans lequel la partition d'infodivertissement du véhicule (12) définit une zone d'exception (226) de l'écran d'affichage (13) de même position et de même contour que l'élément de commande graphique (21, 211, 212) et une zone de sortie (228) de l'écran d'affichage (13) pour l'élément d'infodivertissement graphique (22) exactement complémentaire à la zone d'exception (226) en fonction d'un état de l'élément de commande graphique (21, 211, 212).

7. Procédé selon l'une des revendications 4 à 6, dans lequel la partition d'infodivertissement du véhicule (12) dispose dans le plan de composition arrière (113) un élément d'espacement sans fonction (227) de même position et de même contour que l'élément de commande graphique (212) maximisé, qui n'est couvert par aucune application de la partition d'infodivertissement (12) du véhicule autre qu'un éditeur de méthode d'entrée (225) de la partition d'infodivertissement (12) du véhicule.

8. Procédé selon l'une des revendications 1 à 7, dans lequel l'élément de commande graphique (21) est initialisé en tant que l'élément de commande graphique (212) maximisé et/ou une minimisation de l'élément de commande graphique (21, 212) ou une maximisation de l'élément de commande graphique (21, 211) comprend une animation de l'élément de commande graphique (21).

9. Procédé selon l'une des revendications 1 à 8, dans lequel un élément de commande graphique d'un système de climatisation du véhicule est affiché en tant que l'élément de commande graphique (21) et/ou un système d'exploitation Android est exécuté dans la partition d'infodivertissement (12) du véhicule et/ou le sous-système de processeur exécute un hyperviseur virtualisant le sous-système de processeur, et l'hyperviseur exécuté par le sous-système de processeur exécute la partition de système (11) et la partition d'infodivertissement (12) du véhicule.

10. Système d'information (1) pour un véhicule, comprenant un système monopuce ayant au moins un sous-système de processeur, une partition de système (11) exécutable par le sous-système de processeur, une partition d'infodivertissement (12) de véhicule exécutable par le sous-système de processeur, et un dispositif de composition principal (111), qui comprend un plan de composition avant (112) et un plan de composition arrière (113), et un écran d'affichage (13) tactosensible, disposé au centre d'un véhicule, relié fonctionnellement au système monopuce, et qui est configuré pour exécuter un procédé selon l'une des revendications 1 à 9.
